# DEMANDE DE BREVET EUROPEEN

(11) **EP 1 306 812 A1**
(43) Date de publication de la demande: **02.05.2003**
(21) Numéro de dépôt: 02292527.5
(22) Date de dépôt: 14.10.2002
(51) Int. Cl.: G06T 15/70

(54) **Procédé et dispositif pour l'évaluation d'au moins une caractéristique d'un produit**

(30) Priorité: 16.10.2001 FR 0113325
(71) Demandeur: L'OREAL, 75008 Paris (FR)
(72) Inventeur: Bazin, Roland, 91570 Bievres (FR); Doublet, Eric, 94800 Villejuif (FR)
(74) Mandataire: Tanty, François

(57) **Abrégé**

La présente invention concerne un procédé pour déterminer le degré effectif et/ou souhaité d'au moins une caractéristique d'un produit, comportant les étapes suivantes :
a) générer au moins une séquence d'images (14) exprimant ladite caractéristique avec un degré variant progressivement et,
b) identifier à l'intérieur de la séquence, au moins une image ou suite d'images correspondant au degré effectif et/ou souhaité de ladite caractéristique.

## Description

La présente invention est relative notamment à l'évaluation d'au moins une caractéristique d'un produit, par exemple une caractéristique d'un produit cosmétique ou de soins.

Parmi les caractéristiques concernées, on peut citer, cette liste n'étant pas limitative, toutes les caractéristiques d'aspect ou de comportement du produit, par exemple au prélèvement, à l'application ou dans le temps.

Il existe un besoin pour disposer d'un nouvel outil qui puisse faciliter la caractérisation « sensorielle » d'un produit.

Il existe également un besoin pour faciliter la fabrication et/ou la fourniture aux consommateurs de produits répondant le mieux possible à leurs attentes.

L'invention a notamment pour objet un procédé permettant de répondre à l'un au moins des besoins précités, en permettant de déterminer le degré effectif et/ou souhaité d'au moins une caractéristique d'un produit.

Selon un aspect de l'invention, un tel procédé peut se caractériser par le fait qu'il comporte les étapes suivantes :
a) générer au moins une séquence d'images exprimant ladite caractéristique avec un degré variant progressivement, et
b) identifier à l'intérieur de la séquence au moins une image ou suite d'images correspondant au degré effectif et/ou souhaité de ladite caractéristique.

Par « image » au sens de la présente invention, on entend toute image affichée ou projetée, 2D ou 3D, ou toute image non affichée, correspondant par exemple à des données numériques stockées dans une mémoire ou sur un support d'enregistrement de données numériques, tel qu'un disque dur ou un disque optique.

Par « séquence » au sens de la présente invention, on entend une série d'images qui, lorsqu'elles sont visualisées, ne le sont pas toutes de manière simultanée.

Les images de la séquence peuvent correspondre à différents degrés d'une caractéristique exprimée à des degrés variables dans ces images, par exemple selon une progression continue ou sensiblement continue.

Comme indiqué plus haut, au moins une image de la séquence peut être affichée, mais on ne sort pas du cadre de l'invention lorsqu'aucune image de la séquence n'est affichée, par exemple parce que les images sont imprimées ou parce qu'une comparaison entre des images de la séquence et au moins une image de référence est effectuée de manière automatique.

Selon un autre aspect de l'invention, des images de la séquence peuvent être affichées de manière à créer une séquence animée.

Selon un autre aspect de l'invention, des images de la séquence peuvent être affichées de manière sélective, en fonction d'une action de l'observateur. Ainsi, par exemple, des images de la séquence peuvent être affichées en fonction d'une action de l'observateur sur un curseur d'une barre de défilement. On peut aussi afficher une image et permettre à l'observateur de modifier par exemple au moins deux caractéristiques du produit exprimées par cette image. On peut par exemple permettre à l'observateur de modifier au moins deux caractéristiques exprimées par cette image par action sur deux curseurs de deux barres de défilement.

Selon un autre aspect de l'invention, on génère une information représentative du degré d'une caractéristique du produit, exprimé par une image sélectionnée parmi les images de la séquence. Cette information peut comprendre une valeur numérique ou non.

Selon un autre aspect de l'invention, le procédé peut comporter les étapes suivantes :
a) afficher en un premier emplacement géographique des images d'une séquence d'images, puis
b) transférer des informations représentatives d'une sélection opérée parmi les images de la séquence vers un second emplacement géographique,
c) collecter et/ou traiter les informations recueillies au second emplacement géographique.

Les informations précitées peuvent être transmises par l'intermédiaire d'un réseau informatique, Internet par exemple.

Comme évoqué plus haut, selon un autre aspect de l'invention, la séquence d'images peut être générée de manière à permettre une évaluation automatique par un système informatique, et l'on peut déterminer, par un processus de comparaison entre des images de la séquence et au moins une image de référence d'un produit que l'on cherche à évaluer, le degré effectif d'une caractéristique de ce produit.

Selon un autre aspect de l'invention, la séquence d'images peut être générée par calculs. La séquence d'images peut être par exemple générée au moyen d'un logiciel de morphage, à partir d'au moins une image de départ et d'une image d'arrivée, ces images de départ et d'arrivée correspondant respectivement à des degrés différents d'une caractéristique du produit.

Les images peuvent être générées par exemple avec une partie variable superposée à un fond. Ce dernier peut représenter une trame, par exemple.

Selon un aspect de l'invention, le fond peut représenter une image d'une surface sur laquelle le produit est destiné à être appliqué. Il peut s'agir par exemple d'une surface kératinique.

Le fond peut aussi être choisi par exemple parmi un ensemble d'images prédéterminées.

Le fond peut être une image de synthèse, mais le fond peut aussi provenir, par exemple, d'une image acquise au moyen d'une caméra ou d'un scanner, une telle image étant par exemple celle d'une personne à laquelle est destiné un produit.

Selon un aspect de l'invention, la séquence peut comporter plusieurs sous-séquences mises bout à bout, chaque sous-séquence étant générée par exemple à partir d'une image de départ et d'une image d'arrivée, l'image de départ de la sous-séquence d'ordre n correspondant par exemple à l'image d'arrivée de la sous-séquence d'ordre n-1.

Le nombre d'images d'une séquence peut être supérieur ou égal à 10 par exemple, voire supérieur ou égal à 20, voire supérieur ou égal à 50.

Au moins une caractéristique du produit qui est exprimée à des degrés différents dans la séquence d'images peut être par exemple choisie parmi : la couleur, la brillance, la transparence, la texture, la rhéologie, la densité.

Au moins une caractéristique du produit qui est exprimée à des degrés différents par les images de la séquence peut être par exemple une caractéristique concernant l'aspect du produit, indépendamment de son application.

Au moins une caractéristique du produit qui est exprimée à des degrés différents par les images de la séquence peut être par exemple une caractéristique concernant l'aptitude au prélèvement du produit, à l'aide d'un applicateur, d'un doigt ou par contact ou friction, par exemple.

Au moins une caractéristique du produit qui est exprimée à des degrés différents par les images de la séquence peut être par exemple une caractéristique concernant le comportement à l'application du produit.

Au moins une caractéristique du produit qui est exprimée à des degrés différents par les images de la séquence peut encore être une caractéristique concernant l'évolution au cours du temps du produit, par exemple sa tenue.

L'invention a encore pour objet un procédé de fabrication d'un produit qui, selon un aspect de l'invention, peut se caractériser par le fait qu'il comporte les étapes suivantes :
a) générer une séquence d'images exprimant une caractéristique d'un produit avec un degré variant progressivement,
b) identifier à l'intérieur de la séquence, au moins une image ou suite d'images correspondant à un degré donné de ladite caractéristique,
c) fabriquer un produit exprimant ladite caractéristique avec le degré correspondant à l'image ou la suite d'images ainsi identifiée.

L'invention a encore pour objet un procédé pour déterminer l'influence, sur une caractéristique d'un produit, d'une modification de la formulation du produit.

Selon un aspect de l'invention, ce procédé peut se caractériser par le fait qu'il comprend les étapes suivantes :
a) générer une séquence d'images exprimant une caractéristique d'un produit avec un degré variant progressivement,
b) identifier à l'intérieur de la séquence d'images, une image ou suite d'images correspondant au degré effectif de ladite caractéristique dans un premier produit test,
c) identifier à l'intérieur de ladite séquence d'images une image ou suite d'images correspondant au degré effectif de ladite caractéristique dans un second produit test, ayant une formulation différente de celle du premier produit test,
d) déterminer en fonction de l'écart de degrés entre les images ou suite d'images sélectionnées aux étapes b) et c), l'influence sur ladite caractéristique de la modification de la formulation concernant les premier et deuxième produits test.

L'invention a encore pour objet un procédé de fabrication d'un atlas qui, selon un aspect de l'invention, peut se caractériser par le fait qu'il comporte les étapes suivantes :
a) fournir au moins une image de départ et une image d'arrivée correspondant respectivement à des degrés différents d'une caractéristique du produit,
b) générer, notamment au moyen d'un logiciel de morphage, une séquence d'images intermédiaires entre ces images de départ et d'arrivée,
c) sélectionner parmi les images de la séquence au moins deux images,
d) réaliser un atlas comportant une pluralité d'images ainsi sélectionnées.

Les images sélectionnées peuvent être imprimées, par exemple sur un même support.

L'invention a encore pour objet un dispositif permettant de visualiser et/ou de déterminer un degré d'une caractéristique d'un produit qui, selon un aspect de l'invention, peut se caractériser par le fait qu'il comporte une unité programmée pour générer une séquence d'images exprimant différentes gradations d'une caractéristique d'un produit, notamment selon une variation progressive.

Le dispositif peut comporter par exemple un moyen de commande permettant de sélectionner au moins une image de la séquence.

Le dispositif peut comporter au moins un écran pour afficher des images de la séquence.

Le dispositif peut comporter un générateur d'au moins une barre de défilement et d'au moins un curseur permettant de commander le défilement sur un écran des images de la séquence, une seule image de la séquence étant par exemple affichée à la fois. Le dispositif peut comporter un générateur d'au moins deux barres de défilement et de deux curseurs associés, chaque curseur permettant de commander la modification à l'écran d'une caractéristique du produit, exprimée par l'image affichée.

Le dispositif peut comporter des moyens permettant d'envoyer à un serveur des informations représentatives d'une image sélectionnée.

Le dispositif peut comporter une caméra ou un scanner pour acquérir au moins une image d'une personne et des moyens pour générer une image variable superposée à un fond, ce fond étant par exemple généré à partir d'au moins une image acquise par la caméra ou le scanner.

Le dispositif peut comporter des moyens permettant de valider la sélection d'un degré d'une caractéristique du produit.

Le dispositif peut comporter des moyens permettant de fournir une indication, numérique ou non, représentative du degré de la caractéristique du produit exprimé par une image affichée à l'écran.

Le dispositif peut comporter une pluralité de récipients contenant des produits de départ et un distributeur permettant de distribuer un produit élaboré à partir de ou sélectionné parmi les produits de départ, en fonction d'une image sélectionnée.

L'invention a encore pour objet, selon un autre de ses aspects, indépendamment ou en combinaison avec ce qui précède, un procédé pour faciliter l'évaluation d'au moins un degré d'au moins une caractéristique d'un produit, ce procédé comportant
- générer au moins une séquence d'images exprimant ladite au moins une caractéristique variant d'au moins un degré, et
- recevoir une information représentative d'au moins une identification d'au moins une image dans ladite au moins une séquence, ladite au moins une image correspondant à au moins un degré d'au moins une caractéristique du produit.
   L'invention a encore pour objet un dispositif pour faciliter l'une au moins d'une visualisation et d'une évaluation d'au moins un degré d'au moins une caractéristique d'un produit, cet appareil comportant
- un processeur agencé pour générer au moins une séquence d'images exprimant différentes gradations d'au moins une caractéristique d'un produit.

L'invention pourra être mieux comprise à la lecture de la description détaillée qui va suivre, d'exemples de mise en oeuvre non limitatifs, et à l'examen du dessin annexé, qui fait partie intégrante de la description, et sur lequel :
- la figure 1 représente de manière schématique un ordinateur personnel, susceptible d'être utilisé pour la mise en oeuvre de l'invention,
- la figure 2 est une vue également schématique représentant un serveur relié à une pluralité d'ordinateurs personnels, notamment par le réseau Internet,
- la figure 3 est un schéma illustrant certains aspects d'un programme pouvant être utilisé pour mettre en oeuvre l'invention,
- la figure 4 est une représentation schématique d'une séquence d'images exprimant à différents degrés une caractéristique d'un produit,
- la figure 5 illustre la possibilité de faire varier deux caractéristiques d'un produit en agissant sur deux curseurs respectivement associés à ces caractéristiques,
- la figure 6 représente de manière schématique une séquence d'image comportant un fond et une partie variable superposée au fond,
- les figures 7 à 13 représentent partiellement et schématiquement des séquences concernant différentes caractéristiques de produits,
- la figure 14 représente de manière très schématique un moteur de comparaison d'images,
- la figure 15 illustre la constitution d'une banque de données multivectorielle,
- la figure 16 représente de manière schématique un atlas pouvant être réalisé en mettant en oeuvre l'invention, et
- la figure 17 représente de manière schématique un dispositif permettant de fournir un produit ayant au moins une caractéristique sélectionnée par un utilisateur.

L'invention peut être mise en oeuvre par exemple au moyen d'un ordinateur personnel.

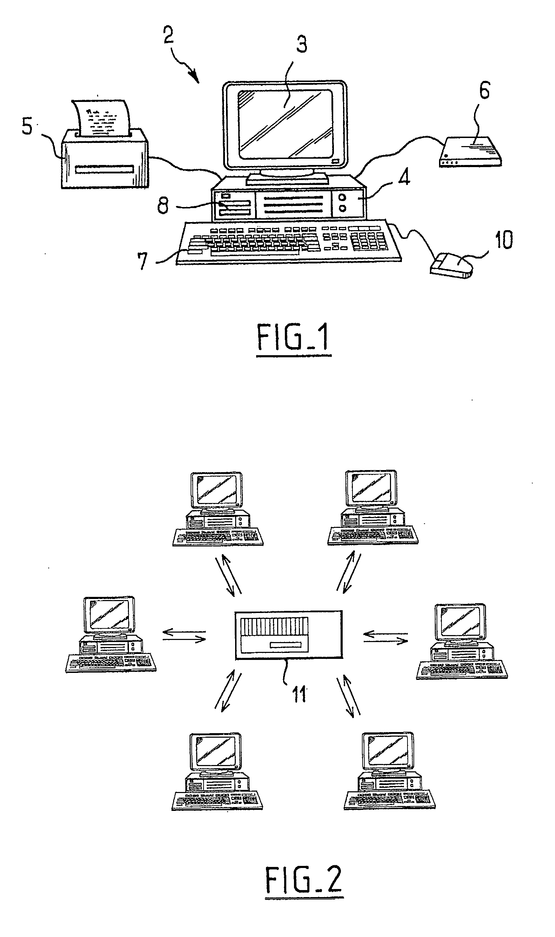

On a représenté à titre d'exemple sur la figure 1 un ordinateur personnel 2 comportant une unité centrale 4 reliée à un certain nombre de périphériques externes tels qu'un écran 3, une imprimante 5, un modem 6, un clavier 7 et une souris 10.

L'ordinateur 2 comporte également des lecteurs 8 de disques optiques et de disquettes et un disque dur. Il peut être relié à un serveur 11 par un réseau informatique tel qu'Internet, comme illustré à la figure 2.

L'ordinateur 2 peut être programmé pour permettre l'affichage sur l'écran 3 d'une séquence d'images exprimant une caractéristique d'un produit avec un degré variable, par exemple un degré variant progressivement d'une image à l'autre.

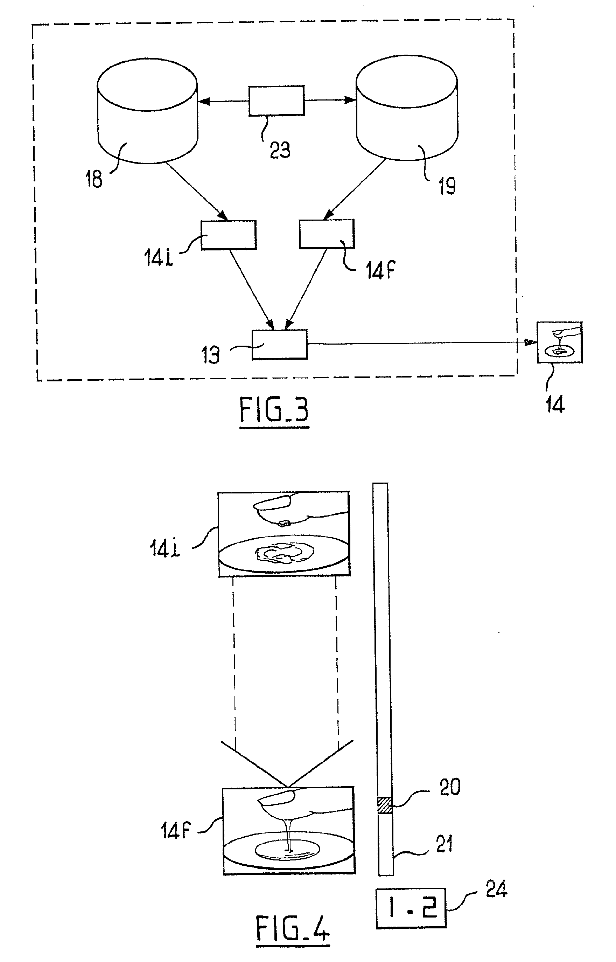

On peut notamment charger dans l'ordinateur 2 un programme dont on va maintenant décrire certains aspects en référence à la figure 3. Ce programme peut inclure un générateur d'images 13 apte à générer par morphage par exemple une séquence d'images 14 à partir d'au moins une image de départ 14i et d'une image d'arrivée 14f, ces images de départ et d'arrivée étant par exemple prélevées dans des banques d'images respectives 18 et 19.

On a représenté de manière schématique à la figure 4 un exemple de séquence, exprimant à des degrés divers l'aptitude au prélèvement d'un produit liquide. Cette séquence comporte au moins une image de départ 14i et au moins une image d'arrivée 14f et une série d'images représentant à des degrés intermédiaires entre ceux des images de départ et d'arrivée, l'aptitude au prélèvement du produit. Dans l'exemple illustré à la figure 4, l'image de départ 14i correspond par exemple au cas où le produit est très peu fluide et l'image d'arrivée 14f au cas où le produit est très filant.

L'ordinateur 2 peut être agencé pour faire défiler image par image une séquence d'images 14 sur l'écran 3, tout en permettant à un observateur de provoquer un arrêt sur image, par exemple en appuyant sur une touche du clavier 7 ou en cliquant sur un bouton de la souris 10, d'autres moyens de commande étant encore possibles sans que l'on sorte du cadre de la présente invention, notamment le recours à la voix ou à un écran tactile.

Le défilement des images 14 peut également être provoqué par une action exercée par un observateur sur un curseur 20 d'une barre de défilement 21, comme illustré sur la figure 4. Selon le positionnement du curseur 20, l'utilisateur peut provoquer l'affichage d'une image de la séquence plus ou moins proche des images de départ 14i ou d'arrivée 14f.

Les images de départ 14i et d'arrivée 14f peuvent être sélectionnées dans les banques d'images 18 et 19 en fonction d'informations fournies par un moteur de sélection 23.

Le moteur de sélection 23 procède par exemple en provoquant l'affichage sur l'écran 3 d'un ou plusieurs questionnaires concernant par exemple la nature du produit et la ou les caractéristiques à évaluer. En fonction des réponses fournies, le moteur de sélection 23 sélectionne dans les banques d'images 18 et 19 les images de départ 14i et d'arrivée 14f.

La position du curseur 20 sur la barre de défilement 21 peut permettre de renseigner sur le degré de la caractéristique du produit correspondant à l'image affichée, cette position pouvant être repérée par exemple par une information alphanumérique 24 apparaissant sur l'écran 3, cette information pouvant être transmise le cas échéant au serveur distant 11 précité, en vue du traitement à distance des résultats de l'évaluation, par exemple.

L'information alphanumérique 24 peut par exemple être un score proportionnel au nombre d'images 14 de la séquence compris entre l'image affichée à l'écran ou sélectionnée et l'image de départ 14i ou d'arrivée 14f.

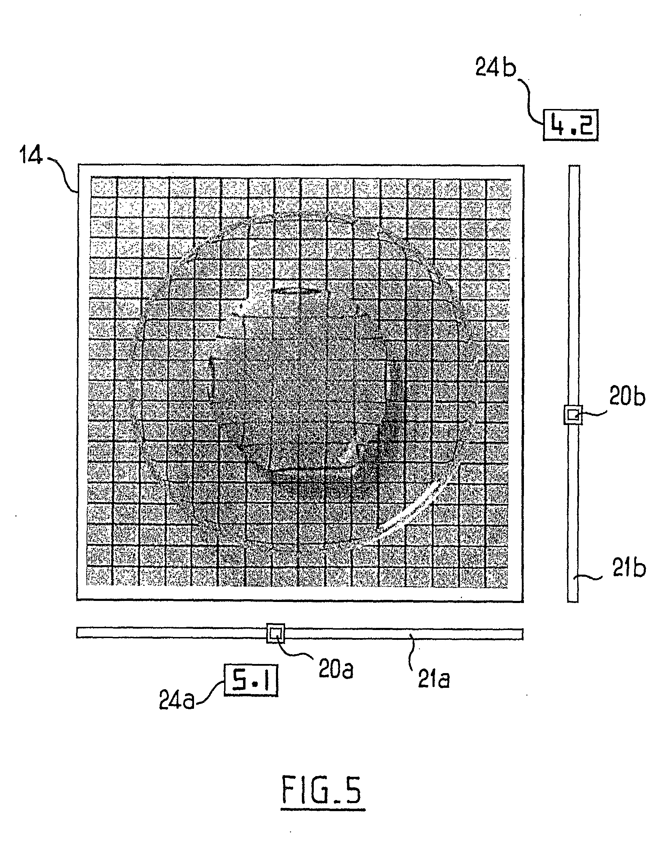

Le changement des images apparaissant à l'écran peut encore être provoqué par une action d'un observateur sur l'un ou l'autre de deux curseurs 20a, 20b de deux barres de défilement respectives 21a, 21b, les positions de chaque curseur étant par exemple repérées par des indications numériques respectives 24a et 24b, comme illustré sur la figure 5.

Une action de l'utilisateur sur l'un des curseurs peut permettre par exemple de faire varier l'une des caractéristiques du produit, tandis qu'une action sur l'autre curseur peut permettre à l'utilisateur de faire varier une autre caractéristique du produit.

On peut bien entendu, sans sortir du cadre de la présente invention, prévoir une multiplicité de curseurs ou de manière plus générale une pluralité de boutons de commande permettant de faire varier chacun au moins l'affichage d'une caractéristique du produit sélectivement. On peut également, sans sortir du cadre de la présente invention, faire en sorte qu'au moins une caractéristique du produit varie en réponse à une action de commande vocale de l'utilisateur, par exemple.

Le générateur d'images 13 peut être un logiciel réalisant par exemple par calcul des interpolations pixel à pixel de deux images, permettant ainsi de construire une série continue d'images 14 intermédiaires entre des images de départ 14i et d'arrivée 14f. A titre d'exemple de logiciels de morphage, on peut citer notamment les programmes connus sous les dénominations WINMORPH V2.1, CINEMORPH 1.2, MPMORPH 4x, TSMORPH 32, FASTMORPHER 1.03, VISIONAIRE 1.0, MORPH PLUS 1.04, V-MORPH 2.0, AGA MORPH 2.2, IMAGE MASTER 1.50R, ELASTIC DREAMS 1.01 et FANTASTIC DREAMS. Le moteur de sélection 23 précité et les banques d'images 18 et 19 peuvent, le cas échéant, faire partie d'un tel logiciel de morphage.

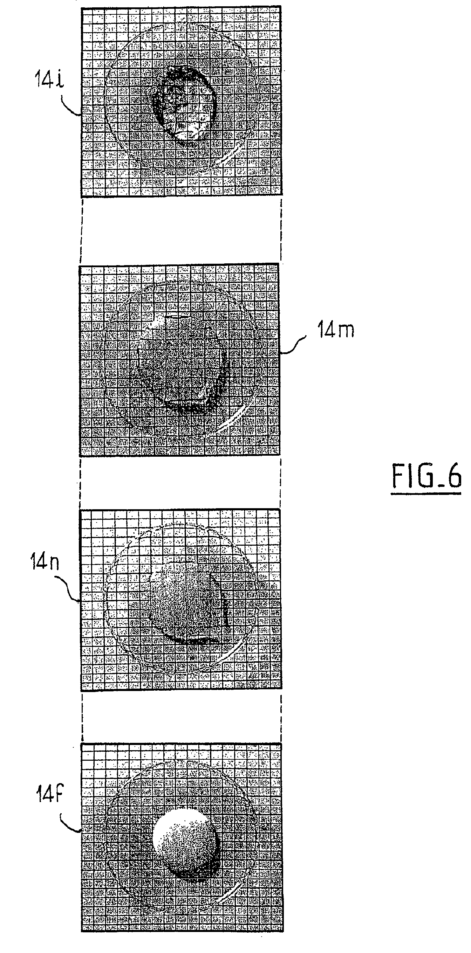

Chaque image peut comporter par exemple un fond auquel est superposée une image variable, comme illustré par exemple à la figure 6. Sur cette figure, on a représenté quelques images intermédiaires 14m, 14n, d'une séquence exprimant de manière progressive une caractéristique d'un produit, en l'espèce la transparence de celui-ci. Le fond est constitué dans l'exemple illustré par une trame et la partie variable de l'image représente une goutte de produit déposée sur un couvercle transparent recouvrant partiellement la trame. L'utilisateur peut apprécier visuellement le degré de transparence du produit selon que la trame sous-jacente est plus ou moins visible. Le fond peut être une image de synthèse, par exemple, ou une image acquise au moyen d'une caméra.

L'invention peut permettre d'évaluer un produit, c'est-à-dire de quantifier certaines caractéristiques du produit.

Pour évaluer un produit, l'utilisateur peut par exemple lancer un programme dans d'ordinateur 2 qui provoque l'affichage à l'écran d'une séquence animée, une seule image étant affichée à la fois, une telle séquence comportant des images dans lesquelles le degré d'une caractéristique d'un produit varie de manière progressive. Lorsqu'une séquence animée défile à l'écran, l'utilisateur peut interrompre par exemple le défilement des images en appuyant sur la touche du clavier ou sur un bouton de la souris lorsqu'il constate que l'image affichée correspond au produit qu'il doit évaluer.

L'utilisateur peut également charger un programme qui, comme indiqué plus haut, permet par exemple d'afficher sélectivement une image en fonction de la position d'au moins un curseur sur une barre de défilement. L'utilisateur peut faire évoluer les images jusqu'à ce qu'il y ait correspondance entre une image affichée et le produit qu'il doit évaluer.

L'invention peut permettre par exemple d'évaluer des caractéristiques d'aspect d'un produit mais également des caractéristiques concernant le comportement du produit lors de son prélèvement, à l'application ou au cours du temps.

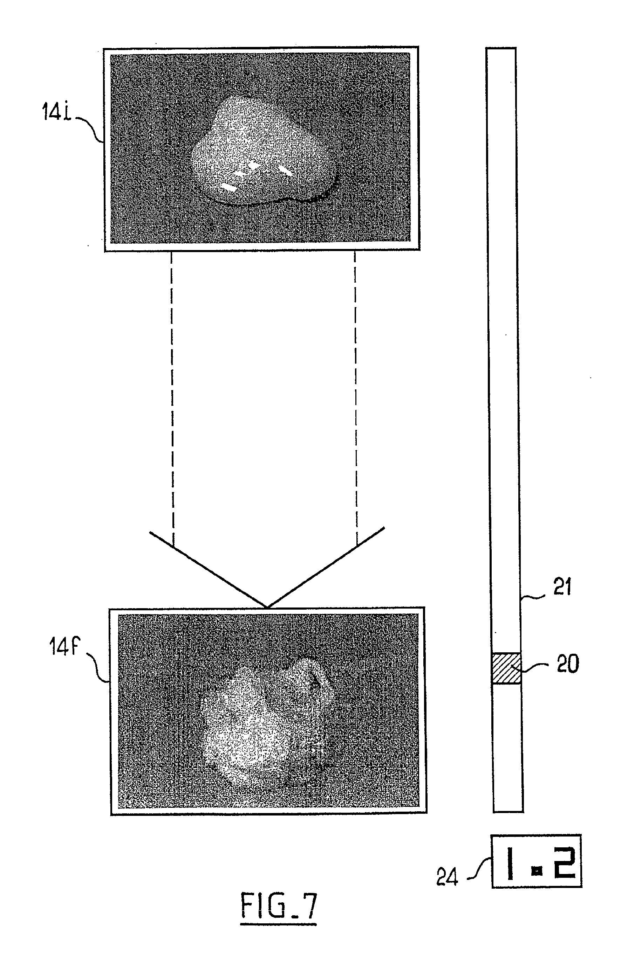

A titre d'exemple, on a représenté sur la figure 7 ce que pourrait être par exemple des images de départ et d'arrivée d'une séquence dans laquelle la caractéristique d'aspect nacré du produit varie.

Une séquence d'images peut être générée avec une image de départ 14i dans laquelle le produit présente une surface lisse et n'a pas l'éclat irisé de la nacre et avec une image d'arrivée 14f, dans laquelle le produit présente l'aspect irisé de la nacre.

Pour évaluer l'aspect nacré d'un produit, l'utilisateur peut en prendre une noisette dans la main et comparer l'aspect de ce produit avec les images de la séquence.

Si la séquence est animée, l'utilisateur peut par exemple arrêter la séquence sur l'image correspondant le mieux, à son avis, au produit qu'il tient dans la main. L'utilisateur peut également, comme expliqué plus haut, agir sur un curseur pour faire évoluer les images et, en procédant par comparaison, déterminer l'image de la séquence qui correspond le mieux à l'aspect du produit qu'il tient dans la main.

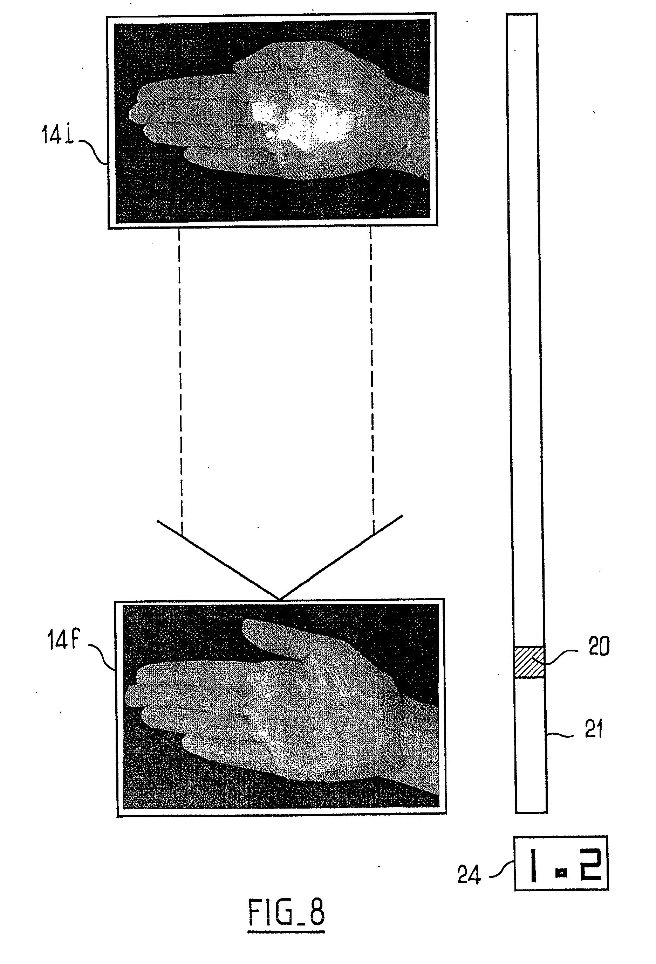

On peut également évaluer, comme illustré sur la figure 8, la facilité de mélange avec l'eau d'un produit en comparant le résultat obtenu lorsque l'on tente de mélanger ce produit avec de l'eau dans le creux de sa main avec les images d'une séquence générée à partir d'une image de départ 14i dans laquelle le produit tend à ne pas se mélanger avec l'eau et d'une image finale 14f représentant une bonne dispersion du produit dans l'eau.

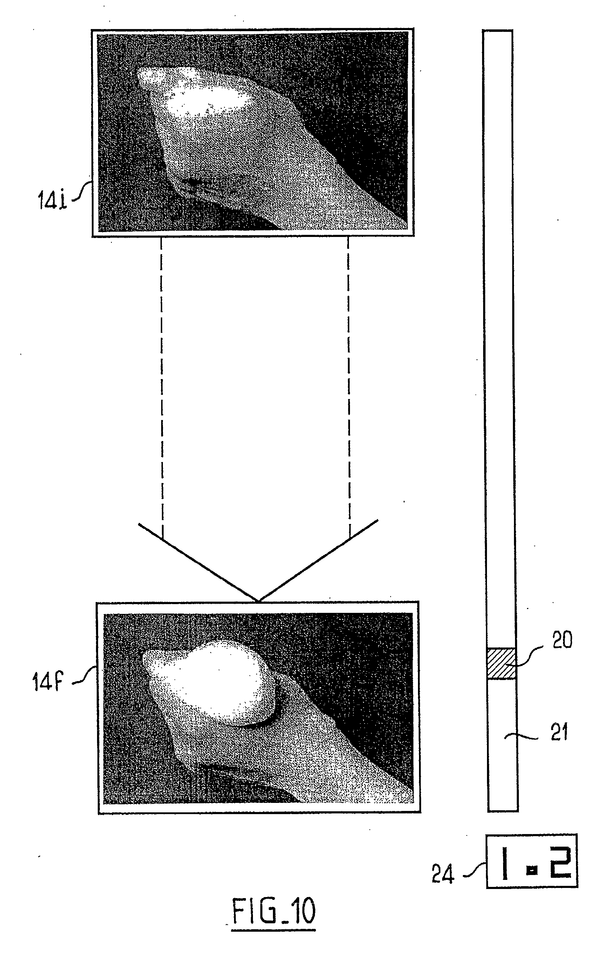

On peut encore évaluer, comme illustré sur la figure 10, le caractère moussant d'un produit. L'utilisateur peut par exemple former de la mousse dans une main et la rassembler en refermant la main. L'utilisateur peut ensuite comparer le résultat qu'il obtient avec une image d'une séquence comportant une image de départ 14i dans laquelle la mousse ne déborde quasiment pas de la main et une image finale 14f dans laquelle la mousse déborde beaucoup.

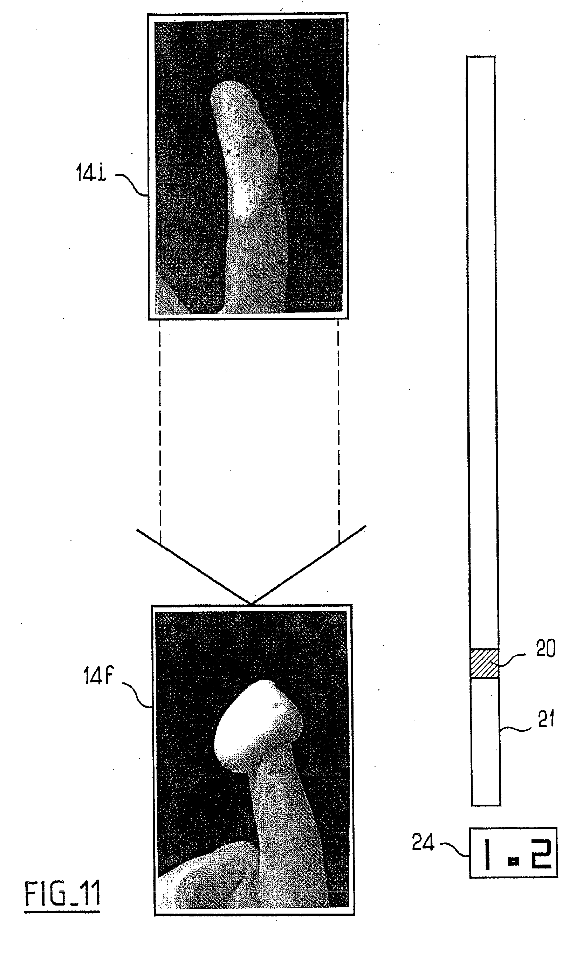

L'utilisateur peut encore évaluer, comme illustré sur la figure 11, l'aptitude d'une mousse à conserver la forme qu'on lui donne, en prélevant un peu de mousse au bout d'un doigt et en observant ensuite si la mousse tend à couler sur son doigt ou à garder sa forme initiale. L'utilisateur peut par exemple comparer le résultat qu'il obtient avec une image d'une séquence comportant une image de départ 14i dans laquelle la mousse coule sur le doigt et une image finale 14f dans laquelle la mousse conserve sa forme initiale.

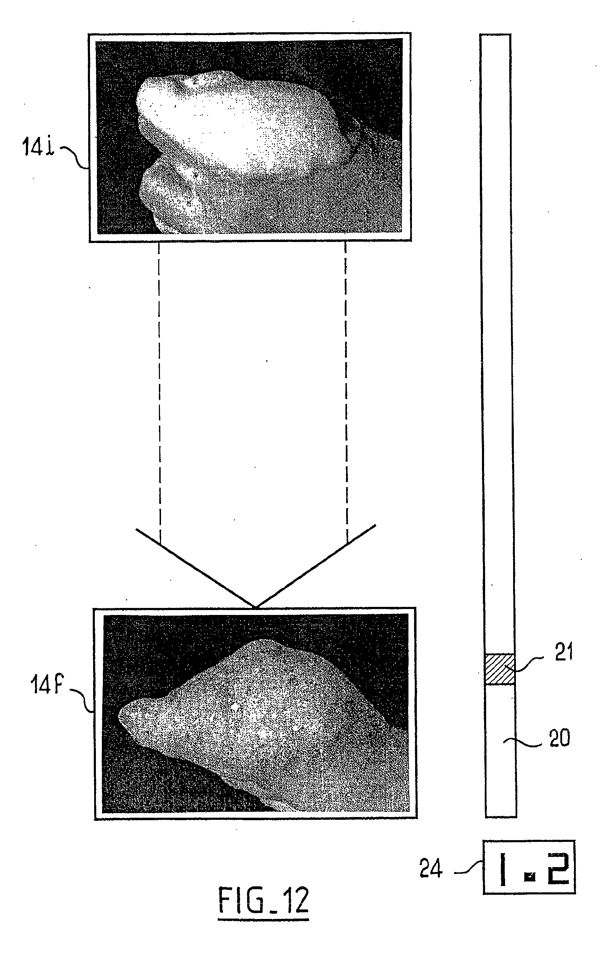

On peut encore évaluer, comme illustré sur la figure 12, la taille des bulles formées par une mousse, c'est-à-dire le caractère aéré ou non d'un produit. L'utilisateur peut comparer le résultat obtenu avec un produit contenu dans sa main et les images d'une séquence générée à partir d'une image de départ 14i dans laquelle le produit est très peu aéré et une image finale 14f dans laquelle le produit est très aéré, formant des bulles relativement grosses.

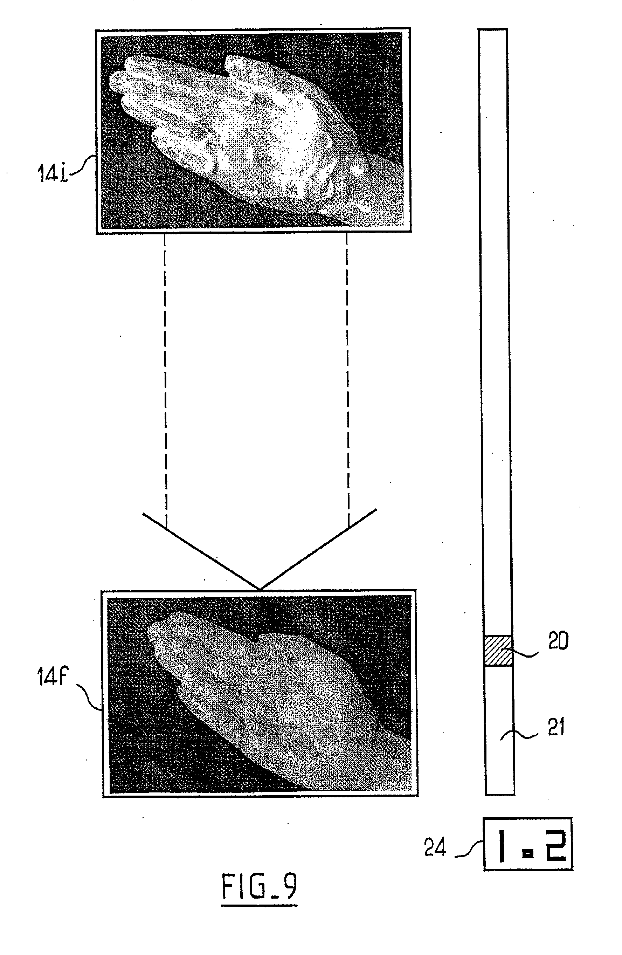

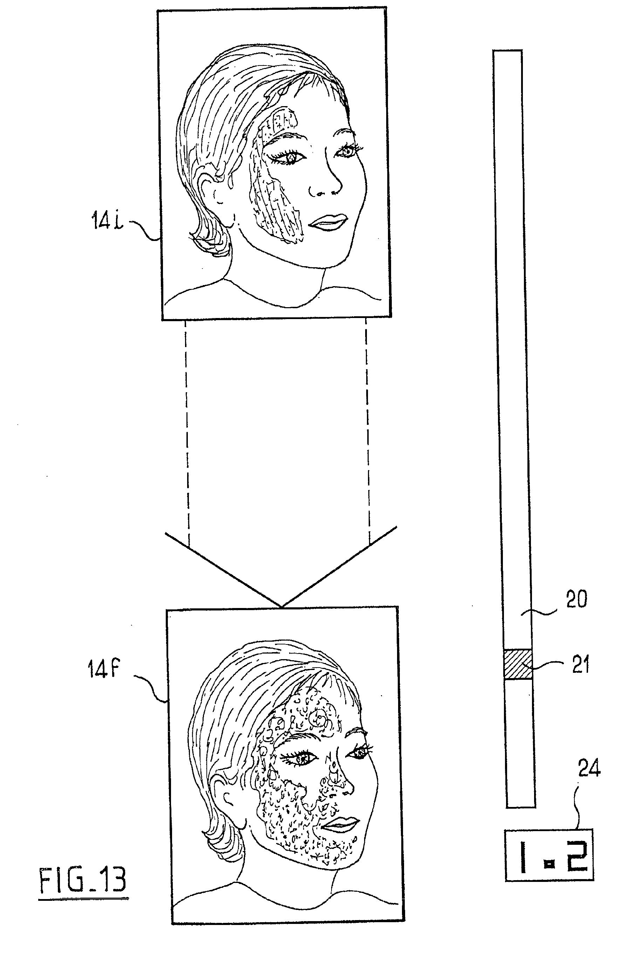

L'utilisateur peut encore, comme illustré sur les figures 9 et 13, évaluer le caractère couvrant d'un produit, c'est-à-dire par exemple l'aptitude du produit à dissimuler la peau, notamment celle du visage, comme un masque.

L'utilisateur peut ainsi par exemple comparer les résultats obtenus en étalant un produit sur la peau des mains ou du visage avec les images d'une séquence générée à partir d'une image de départ 14i où le produit est faiblement couvrant et d'une image d'arrivée 14f où le produit est très couvrant.

Si l'évaluation se fait en appliquant le produit sur le visage, la séquence peut représenter un visage d'une personne différente de l'utilisateur, par exemple un visage réalisé par synthèse ou encore le propre visage de la personne qui doit faire l'évaluation. Dans ce cas, l'ordinateur qui permet de générer la séquence peut par exemple être relié à une caméra ou à un scanner permettant d'acquérir une image du visage de la personne qui doit faire l'évaluation, ce qui peut permettre ensuite de faciliter la comparaison du résultat obtenu dans la réalité avec le produit à évaluer et les images de la séquence.

L'acquisition d'une image d'un utilisateur peut encore être utile pour faciliter la détermination d'un degré souhaité d'une caractéristique d'un produit, comme cela sera détaillé plus loin.

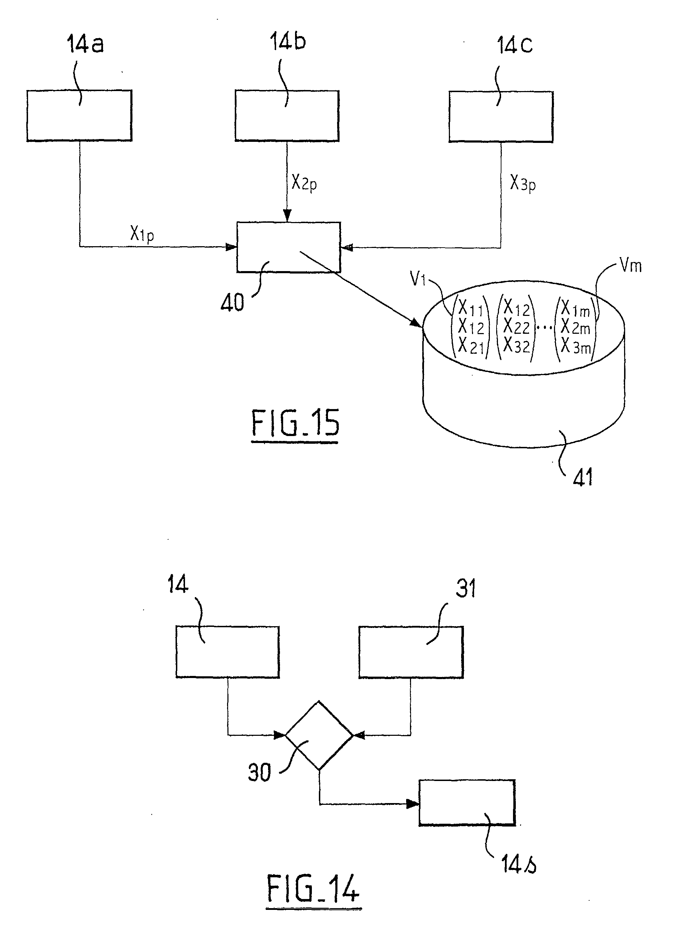

Les images de la séquence peuvent être affichées ou non. Elles peuvent ne pas être affichées notamment lorsque les images de la séquence sont utilisées dans un moteur de comparaison 30 de type intelligence artificielle, représenté schématiquement à la figure 14, permettant de déterminer de manière automatique le degré de la caractéristique d'un produit à évaluer.

Un tel moteur de comparaison 30 peut permettre par exemple de comparer de manière automatique, sans qu'il y ait besoin de visualiser une image sur un écran, une image de référence 31 avec les images 14 d'une séquence, afin de sélectionner au moins une image 14s dans cette séquence, par exemple celle considérée comme la plus ressemblante avec l'image de référence 31.

Une fois l'image 14s sélectionnée, cette dernière peut par exemple être affichée ou imprimée afin de permettre une vérification par un opérateur. Un score, calculé par exemple à partir du nombre d'images de la séquence séparant l'une des images de départ ou d'arrivée de l'image sélectionnée 14s, peut éventuellement être affiché ou imprimé ou transmis à distance.

L'invention peut permettre de constituer une banque de données multivectorielle regroupant des données relatives à plusieurs caractéristiques différentes d'un même produit.

A titre d'exemple, on a représenté sur la figure 15 un fichier 40 formé à partir de plusieurs, par exemple trois, images 14a, 14b, 14c sélectionnées parmi des séquences d'images, concernant par exemple des caractéristiques d'aspect du produit, telles que la transparence, la brillance et la texture.

Les images 14a, 14b et 14c ont été sélectionnées par exemple par comparaison visuelle entre des images des séquences correspondantes et le produit à évaluer, ou de manière automatique après avoir acquis une image du produit à évaluer et l'avoir comparée au moyen d'un moteur de comparaison 30 aux images des séquences.

A ces images 14a, 14b et 14c et pour chaque produit P, peuvent être associées des informations X₁ₚ, X₂ₚ et X₃ₚ pour constituer un vecteur Vₚ d'une base de données 41, comme illustré à la figure 15.

Si un seul produit est testé par un panel de personnes, on peut également former une banque de données regroupant une pluralité de vecteurs, chaque vecteur Vₚ ayant pour composantes les caractéristiques du produit évaluées par une personne p.

L'invention peut être mise en oeuvre pour réaliser au moins un atlas d'évaluation d'une caractéristique d'un produit.

Un tel atlas peut être réalisé par exemple en générant une séquence d'images à partir d'une image de départ et d'une image d'arrivée correspondant à deux degrés différents d'une caractéristique d'un produit, puis en sélectionnant des images de la séquence intermédiaire entre ces images de départ et d'arrivée.

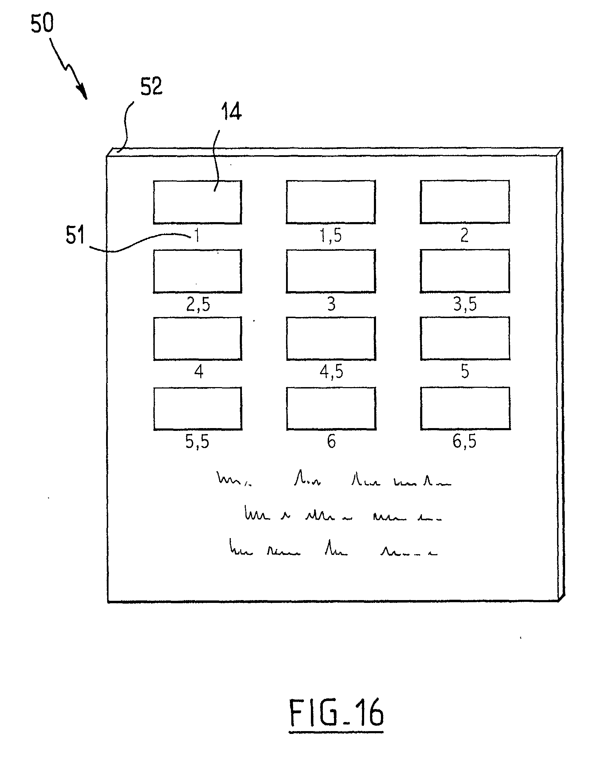

Toutes les images sélectionnées 14 peuvent être imprimées sur un même support 52 pour constituer un atlas 50, tel que représenté sur la figure 16, à chaque image pouvant être associé un identifiant 51, par exemple une valeur numérique exprimant de manière quantitative le degré de la caractéristique du produit exprimé par l'image associée.

L'atlas 50 comporte ainsi par exemple au moins une dizaine d'images représentant divers degrés d'une même caractéristique d'un produit.

Cet atlas peut ensuite être utilisé pour permettre d'évaluer pour des produits donnés la caractéristique en question, par comparaison entre le produit à tester et les images de l'atlas.

Dans de nombreux exemples qui viennent d'être décrits, l'invention est mise en oeuvre pour évaluer au moins une caractéristique d'un produit à tester.

L'invention peut également permettre de déterminer le degré d'au moins une caractéristique d'un produit qui est souhaité par une personne ou par un panel de personnes, dans le but par exemple de fabriquer ensuite un produit qui répond aux attentes de cette ou de ces personnes.

L'invention peut ainsi permettre de déterminer le degré d'une caractéristique d'un produit qui répond le mieux aux attentes des consommateurs.

Dans ce cas, on peut par exemple demander aux personnes d'un panel disposant chacune d'un ordinateur personnel 2 relié au serveur 11, de sélectionner à distance les images de séquences exprimant des caractéristiques d'un ou plusieurs produits qui répondent le mieux, selon elles, à des critères prédéterminés. Il peut s'agir par exemple pour ces personnes d'identifier une image représentant un aspect ou un comportement du produit qu'elles aimeraient rencontrer dans la réalité. Les résultats obtenus peuvent être analysés afin de déterminer quel est statistiquement le degré d'une caractéristique d'un produit qui a la préférence des personnes du panel. Ensuite, un produit peut être fabriqué en s'efforçant de lui conférer la caractéristique souhaitée par les personnes du panel.

On comprend qu'une telle démarche permet d'éviter à faire se déplacer les personnes du panel ou de leur envoyer un grand nombre de produits à évaluer. On peut également toucher un grand nombre de personnes, indépendamment de leur positionnement géographique.

L'invention permet également de réaliser un dispositif qui permet de délivrer à une personne un produit présentant une caractéristique sélectionnée.

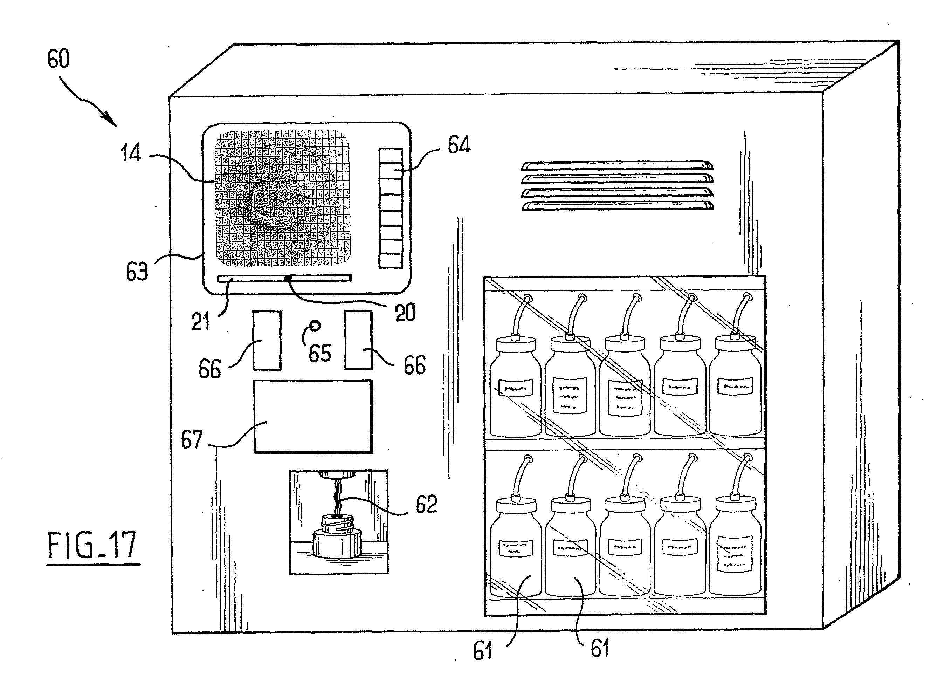

A titre d'exemple, on a représenté sur la figure 17 un dispositif 60 pouvant être installé par exemple sur un lieu de vente et comportant par exemple une pluralité de récipients 61 contenant des composants à partir desquels peut être réalisé un produit 62 cosmétique ou de soins apte à être délivré par le dispositif 60. Ce dernier peut comporter un écran tactile 63 permettant d'afficher une image 14 d'une séquence, un certain nombre de boutons de commande 64 et par exemple également un curseur 20 et une barre de défilement 21. Le dispositif 60 peut comporter une caméra 65 placée entre deux rampes lumineuses 66 et un miroir 67 permettant à l'utilisateur de se regarder. Le dispositif 60 peut être programmé pour permettre à l'utilisateur de modifier par exemple une caractéristique d'un produit destiné à être appliqué sur son visage, par exemple le caractère couvrant de ce produit.

L'utilisateur peut sélectionner une image 14 en agissant par exemple sur le curseur 20 pour modifier la caractéristique en cause.

L'utilisateur, après avoir sélectionné une image ou une suite d'images de la séquence, peut obtenir du dispositif 60 que ce dernier délivre un produit 62 ayant une caractéristique correspondant au degré sélectionné.

L'image 14 affichée à l'écran 63 peut être une image formée à partir d'une image de l'utilisateur acquise au moyen de la caméra 65, afin de permettre à l'utilisateur d'apprécier plus facilement une caractéristique du produit, par exemple son caractère courant. Dans ce cas, l'utilisateur peut en faisant varier l'image affichée déterminer la couvrance du produit 62. Ce dernier peut être fabriqué par mélange de composants ou, en variante, être simplement sélectionné parmi plusieurs produits en réserve dans le dispositif 60.

## Revendications

1. Procédé pour déterminer le degré effectif et/ou souhaité d'au moins une caractéristique d'un produit, comportant les étapes suivantes :
a) générer au moins une séquence d'images (14) exprimant ladite caractéristique avec un degré variant progressivement et,
b) identifier à l'intérieur de la séquence, au moins une image ou suite d'images correspondant au degré effectif et/ou souhaité de ladite caractéristique.

2. Procédé selon la revendication 1, **caractérisé par le fait qu'**au moins une image de la séquence est imprimée.

3. Procédé selon l'une des revendications précédentes, **caractérisé par le fait qu'**au moins une image de la séquence est transmise à distance, par l'intermédiaire d'un réseau informatique, notamment Internet.

4. Procédé selon l'une quelconque des revendications précédentes, **caractérisé par le fait qu'**au moins une image de la séquence est affichée.

5. Procédé selon l'une quelconque des revendications 1 à 3, **caractérisé par le fait qu'**aucune image de la séquence n'est affichée.

6. Procédé selon la revendication 4, **caractérisé par le fait que** des images de la séquence sont affichées de manière à créer une séquence animée.

7. Procédé selon l'une des revendications 4 et 6, **caractérisé par le fait que** des images de la séquence sont affichées de manière sélective, en fonction d'une action de l'observateur.

8. Procédé selon la revendication précédente, **caractérisé par le fait que** des images de la séquence sont affichées en fonction d'une action de l'observateur sur un curseur (20) d'une barre de défilement (21).

9. Procédé selon l'une quelconque des revendications précédentes, **caractérisé par le fait que** l'on génère une information (24) représentative du degré d'une caractéristique du produit, exprimée par une image sélectionnée parmi les images de ladite séquence.

10. Procédé selon la revendication précédente, **caractérisé par le fait que** ladite information comprend une valeur numérique.

11. Procédé selon la revendication 9, **caractérisé par le fait que** ladite information comprend une valeur non numérique.

12. Procédé selon l'une quelconque des revendications précédentes, **caractérisé par le fait qu'**il comporte les étapes suivantes :
a) afficher en un premier emplacement géographique des images d'une séquence d'images, puis
b) transférer des informations représentatives d'une sélection opérée parmi les images de la séquence vers un second emplacement géographique,
c) collecter et/ou traiter les informations recueillies au second emplacement géographique.

13. Procédé selon la revendication 1, **caractérisé par le fait que** la séquence d'images est générée de manière à permettre une évaluation automatique par un système informatique, et **par le fait que** l'on détermine, par un processus de comparaison entre des images de la séquence d'images et au moins une image de référence (31) d'un produit que l'on cherche à évaluer, le degré effectif d'une caractéristique de ce produit.

14. Procédé selon l'une quelconque des revendications précédentes, **caractérisé par le fait que** la séquence d'images est générée par calculs.

15. Procédé selon la revendication précédente, **caractérisé par le fait que** la séquence d'images est générée au moyen d'un logiciel de morphage, à partir d'au moins une image de départ (14i) et une image d'arrivée (14f), ces images de départ et d'arrivée correspondant respectivement à des degrés différents d'une caractéristique du produit.

16. Procédé selon l'une quelconque des revendications précédentes, **caractérisé par le fait que** les images sont générées avec une partie variable superposée à un fond.

17. Procédé selon la revendication précédente, **caractérisé par le fait que** le fond représente une trame.

18. Procédé selon la revendication 16, **caractérisé par le fait que** ledit fond représente une image d'une surface sur laquelle le produit est destiné à être appliqué.

19. Procédé selon l'une quelconque des revendications 16 à 18, **caractérisé par le fait que** le fond est choisi parmi un ensemble d'images prédéterminées.

20. Procédé selon l'une quelconque des revendications 16 à 19, **caractérisé par le fait que** le fond est une image de synthèse.

21. Procédé selon l'une quelconque des revendications 16 à 19, **caractérisé par le fait que** le fond provient d'une image acquise au moyen d'une caméra (65) ou d'un scanner.

22. Procédé selon la revendication précédente, **caractérisé par le fait que** l'image acquise par la caméra ou le scanner est une image d'une personne à laquelle est destiné un produit dont le degré d'une caractéristique correspond à une image ou suite d'images sélectionnée parmi ladite séquence.

23. Procédé selon l'une quelconque des revendications précédentes, **caractérisé par le fait que** la séquence comporte plusieurs sous-séquences mises bout à bout, chaque sous-séquence étant générée à partir d'une image de départ et d'une image d'arrivée, l'image de départ de la sous-séquence d'ordre n correspondant à l'image d'arrivée de la sous-séquence d'ordre n-1.

24. Procédé selon l'une quelconque des revendications précédentes, **caractérisé par le fait que** l'on affiche une image et que l'on permet à l'observateur de modifier au moins deux caractéristiques du produit exprimées par cette image.

25. Procédé selon la revendication précédente, **caractérisé par le fait que** l'on permet à l'observateur de modifier au moins deux caractéristiques du produit exprimées par cette image par action sur deux curseurs (20a ; 20b) de deux barres de défilement (21a; 21b).

26. Procédé selon l'une quelconque des revendications précédentes, **caractérisé par le fait que** le nombre d'images d'une séquence est supérieur ou égal à 10.

27. Procédé selon la revendication précédente, **caractérisé par le fait que** ledit nombre d'images est supérieur ou égal à 20.

28. Procédé selon la revendication précédente, **caractérisé par le fait que** ledit nombre d'images est supérieur ou égal à 50.

29. Procédé selon l'une quelconque des revendications précédentes, **caractérisé par le fait qu'**au moins une caractéristique du produit qui est exprimée à des degrés différents dans la séquence d'images est choisie parmi : la couleur, la brillance, la transparence, la texture, la rhéologie, la densité.

30. Procédé selon l'une quelconque des revendications précédentes, **caractérisé par le fait qu'**au moins une caractéristique du produit qui est exprimée à des degrés différents par les images de la séquence est une caractéristique concernant l'aspect du produit, indépendamment de son application.

31. Procédé selon l'une quelconque des revendications précédentes, **caractérisé par le fait qu'**au moins une caractéristique du produit qui est exprimée à des degrés différents par les images de la séquence est une caractéristique concernant l'aptitude au prélèvement du produit.

32. Procédé selon l'une quelconque des revendications précédentes, **caractérisé par le fait qu'**au moins une caractéristique du produit qui est exprimée à des degrés différents par les images de la séquence est une caractéristique concernant le comportement à l'application du produit.

33. Procédé selon l'une quelconque des revendications précédentes, **caractérisé par le fait qu'**au moins une caractéristique du produit qui est exprimée à des degrés différents par les images de la séquence est une caractéristique concernant l'évolution au cours du temps du produit.

34. Procédé de fabrication d'un produit, **caractérisé par le fait qu'**il comporte les étapes suivantes :
a) générer une séquence d'images exprimant ladite caractéristique avec un degré variant progressivement,
b) identifier à l'intérieur de la séquence, au moins une image ou suite d'images correspondant au degré effectif et/ou souhaité de ladite caractéristique,
c) fabriquer un produit exprimant ladite caractéristique avec le degré correspondant à l'image ou la suite d'images ainsi identifiée.

35. Procédé pour déterminer l'influence, sur une caractéristique d'un produit, d'une modification de la formulation de ce produit, **caractérisé par le fait qu'**il comprend les étapes suivantes :
a) générer une séquence d'images exprimant une caractéristique d'un produit avec un degré variant progressivement,
b) identifier à l'intérieur de la séquence d'images, une image ou suite d'images correspondant au degré effectif de ladite caractéristique dans un premier produit test,
c) identifier à l'intérieur de ladite séquence d'images une image, ou suite d'images correspondant au degré effectif de ladite caractéristique dans un second produit test, ayant une formulation différente de celle du premier produit test,
d) déterminer en fonction de l'écart de degrés entre les images ou suites d'images sélectionnées aux étapes b) et c), l'influence sur ladite caractéristique de la modification de la formulation concernant les premier et deuxième produits test.

36. Procédé de fabrication d'un atlas (50) représentant différentes gradations d'au moins une caractéristique d'un produit, **caractérisé par le fait qu'**il comporte les étapes suivantes :
a) sélectionner au moins une image de départ et une image d'arrivée correspondant respectivement à des degrés différents d'une caractéristique du produit,
b) générer, notamment au moyen d'un logiciel de morphage, une séquence d'images intermédiaires entre ces images de départ et d'arrivée,
c) sélectionner parmi les images de la séquence au moins deux images,
d) réaliser un atlas comportant une pluralité d'images ainsi sélectionnées.

37. Procédé selon la revendication précédente, **caractérisé par le fait que** les images sélectionnées sont imprimées.

38. Procédé selon la revendication 37, **caractérisé par le fait que** les images sélectionnées sont imprimées sur un même support (52).

39. Dispositif permettant de visualiser et/ou de déterminer un degré d'une caractéristique d'un produit, **caractérisé par le fait qu'**il comporte une unité programmée pour générer une séquence d'images exprimant différentes gradations de ladite caractéristique, notamment selon une variation progressive.

40. Dispositif selon la revendication précédente, **caractérisé par le fait qu'**il comporte un moyen de commande permettant de sélectionner au moins une image de la séquence.

41. Dispositif selon l'une des revendications 39 et 40, **caractérisé par le fait qu'**il comporte au moins un écran pour afficher des images de la séquence.

42. Dispositif selon l'une quelconque des revendications 40 à 41, **caractérisé par le fait qu'**il comporte un générateur d'au moins une barre de défilement et d'un curseur permettant de commander le défilement sur un écran des images de la séquence, une seule image de la séquence étant affichée à la fois.

43. Dispositif selon l'une quelconque des revendications 39 à 42, **caractérisé par le fait qu'**il comporte des moyens permettant d'envoyer à un serveur des informations représentatives d'une image sélectionnée.

44. Dispositif selon l'une quelconque des revendications 39 à 43, **caractérisé par le fait qu'**il comporte une caméra ou un scanner pour acquérir au moins une image d'une personne et des moyens pour générer une image variable superposée à un fond constant, ledit fond constant étant généré à partir d'au moins une image acquise par la caméra ou le scanner.

45. Dispositif selon l'une quelconque des revendications 39 à 44, **caractérisé par le fait qu'**il comporte des moyens permettant de valider la sélection d'un degré d'une caractéristique du produit.

46. Dispositif selon l'une quelconque des revendications 39 à 45, **caractérisé par le fait qu'**il comporte un indicateur apte à fournir une indication représentative du degré de la caractéristique du produit exprimée par l'image affichée à l'écran.

47. Dispositif selon l'une quelconque des revendications 39 à 46, **caractérisé par le fait qu'**il comporte un générateur d'au moins deux barres de défilement et de deux curseurs associés, chaque curseur permettant de commander la modification à l'écran d'une caractéristique du produit exprimée par l'image affichée.

48. Dispositif selon l'une quelconque des revendications 39 à 47, **caractérisé par le fait qu'**il comporte une pluralité de récipients (61) contenant des produits de départ et un distributeur permettant de distribuer un produit (62) élaboré à partir de ou sélectionné parmi les produits de départ, en fonction d'une image (14) sélectionnée.
